# EUROPEAN PATENT APPLICATION

(11) **EP 2 482 047 A1**
(43) Date of publication of application: **01.08.2012**
(21) Application number: 12151019.2
(22) Date of filing: 13.01.2012
(51) Int. Cl.: G01H 1/00

(54) **Method, System and Computer Program Product to Identify a Physical Event Using a Vibration Signature**

(30) Priority: 27.01.2011 US 201113014746
(71) Applicant: General Electric Company, Schenectady, New York 12345 (US)
(72) Inventor: Lafrance, Ryan Marc, Atlanta, GA 30339 (US)
(74) Representative: Bedford, Grant Richard

(57) **Abstract**

Described herein are embodiments of methods and systems to identify a physical event using a vibration signature. One aspect of the method comprises forming 902 one or more identified vibration signatures that are each associated with a respective known physical event. The method further comprises receiving 904 a vibration signature associated with an actual physical event, and identifying 906 the actual physical event by comparing the vibration signature with the one or more identified vibration signatures that are each associated with a respective known physical event.

## Description

In many instances, the identification of a physical event such as, for example, the opening or closing of a switch, cannot be determined with certainty. For example, in many instances utility service meters are equipped with an electromechanical switch that can be actuated remotely to perform functions such as disconnection or connection of utility services to the metered loads, load shedding and load control, and the like. Generally, determination of switch actuation is accomplished by detecting the presence, or absence, of the utility service on the load side of the meter. For example, if the utility service provided is electricity, then operation of the switch is determined through electronic acknowledgement of switch actuation by means of detection of current flow (or detecting absence of current flow) on the load side meter terminals. Similarly, services such as gas or water can be detected by detecting flow (or absence of flow) on the load side of the meter. However, by using only a single method of feedback i.e. electronic, errors are possible, exposing field technicians and property owners to dangerous situations and meter manufactures to safety liability. While he use of an accelerometer to detect mechanical vibrations is a good way to verify a physical event occurring or not occurring, a challenge still remains in determining the nature of the physical event that occurred. For example, in some instances switches may be closed under no load conditions, thereby negating the ability to determine status based on detection (or absence of) the service or product.

Therefore, systems, methods and computer program products are desired that provide a way for determination of the nature of a physical event that overcomes challenges present in the art, some of which are described above.

Described herein are embodiments methods, systems and computer program products to identify a physical event using a vibration signature.

One aspect of the method comprises forming one or more identified vibration signatures that are each associated with a respective known physical event. The method further comprises receiving vibration data associated with an actual physical event, and identifying the actual physical event by comparing the vibration data with the one or more identified vibration signatures that are each associated with a respective known physical event.

Another aspect of the present invention comprises a system. One embodiment of the system is comprised of a memory and a processor operably connected with the memory. The processor is configured to form one or more identified vibration signatures that are each associated with a respective known physical event. The processor is further configured to receive vibration data associated with an actual physical event, and identify the actual physical event by comparing the vibration data with the one or more identified vibration signatures that are each associated with a respective known physical event.

Yet another aspect of the present invention comprises a computer program product. The computer program product is comprised of computer-executable code sections stored on a non-transitory computer-readable medium. The computer-executable code sections comprise a first section for forming one or more identified vibration signatures that are each associated with a respective known physical event; a second section for receiving vibration data associated with an actual physical event; and a third section for identifying the actual physical event by comparing the vibration data with the one or more identified vibration signatures that are each associated with a respective known physical event.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

The accompanying drawings, which are incorporated in and constitute a part of this specification, illustrate embodiments and together with the description, serve to explain the principles of the methods and systems:
FIG. 1 is a block diagram of a section of an exemplary utility distribution system;
FIG. 2 illustrates overview block diagram of an embodiment of a meter further comprising an accelerometer for detecting switch actuation;
FIG. 3 is exemplary vibration data that can be analyzed using time-domain analysis to produce a vibration signature;
FIG. 4 is an exemplary Fourier transform of vibration data that can be analyzed using frequency-domain analysis to produce a vibration signature;
FIG. 5 illustrates another overview block diagram of an embodiment of a meter further comprising an accelerometer for detecting switch actuation;
FIG. 6 is an exemplary illustration of cross-correlation of two random signals;
FIG. 7 is an exemplary illustration of auto-correlation of a random signal with itself;
FIG. 8 illustrates a block diagram of an entity capable of operating as meter electronics in accordance with one embodiment of the present invention;
FIG. 9 is a flowchart illustrating the operations taken in order to identify a physical event using a vibration signature; and
FIG. 10 is a block diagram illustrating an exemplary operating environment for performing the disclosed methods.

Before the present methods and systems are disclosed and described, it is to be understood that the methods and systems are not limited to specific synthetic methods, specific components, or to particular compositions. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other additives, components, integers or steps. "Exemplary" means "an example of" and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

The present methods and systems may be understood more readily by reference to the following detailed description of preferred embodiments and the Examples included therein and to the Figures and their previous and following description.

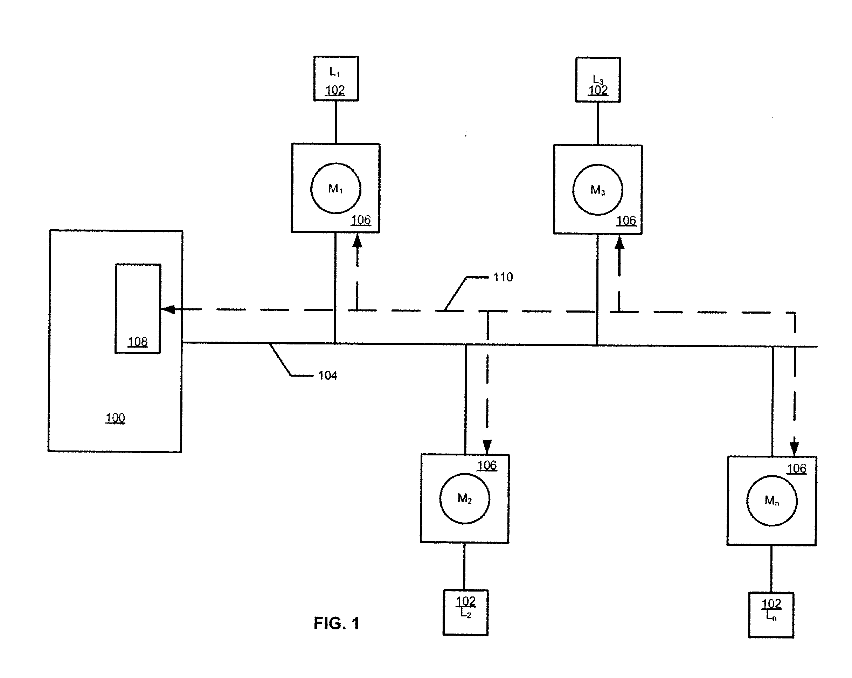

Referring to FIG. 1, an illustration of one type of system that would benefit from embodiments of the present invention is provided. FIG. 1 is a block diagram of a section of an exemplary utility distribution system such as, for example, an electric, water or gas distribution system. However, embodiments of the present invention can be used to benefit any meter that uses electromechanical switches to connect or disconnect a delivered service or product. As shown in FIG. 1, a utility service is delivered by a utility provider 100 to various loads L₁-Lₙ 102 through a distribution system 104. In one aspect, the utility service provided can be electric power. Consumption and demand by the loads 102 can be measured at the load locations by meters M₁-Mₙ 106. If an electric meter, the meters 106 can be single-phase or poly-phase electric meters, as known to one of ordinary skill in the art, depending upon the load 102. While consumption or demand information is used by the utility provider 100 primarily for billing the consumer, it also can be used for other purposes including planning and profiling the utility distribution system. In some instances, utility providers 100 desire to electronically communicate with the meters 106 for numerous purposes including scheduling disconnection or connection of utility services to the loads 102, automatic meter reading (AMR), load shedding and load control, automatic distribution and smart-grid applications, outage reporting, providing additional services such as Internet, video, and audio, etc. In many of these instances, the meters 106 must be configured to communicate with one or more computing devices 108 through a communications network 110, which can be wired, wireless or a combination of wired and wireless, as known to one of ordinary skill in the art. Such meters 106 can be equipped with switches that can be used to remotely connect or disconnect the service or product delivered.

Therefore, it is desired that the meters 106 of a system such as that shown in FIG. 1 are configured to have capabilities beyond that of mere measurement of utility service consumption. Described herein are embodiments of methods, systems and computer program products to identify a physical event using a vibration signature. In general, the technical effect of embodiments of the present invention provide an improvement over current methods of distinguish one event from another by providing a method, system and computer program product to identify a physical event using a vibration signature.

In one aspect, a system and method of obtaining mechanical acknowledgement of switch actuation and position via the use of a accelerometer is described. In one aspect, the accelerometer is a microelectromechanical systems (MEMS) accelerometer. In one aspect, the main board of a meter 106 is populated with a MEMS accelerometer that acts as an "electronic ear" to provide reliable acknowledgement of switch actuation events. The meter will have the signature of possible switch actuation events (opening, closing, etc.) and through digital signal analysis, the switch actuation physical event (e.g., open, close, etc) can be identified. Vibration signature data may be stored on board the meter and can also be transmitted back to the service provider. Embodiments of the invention described herein are not limited to any specific device or metering technology. (e.g. electric, gas, water, etc.)

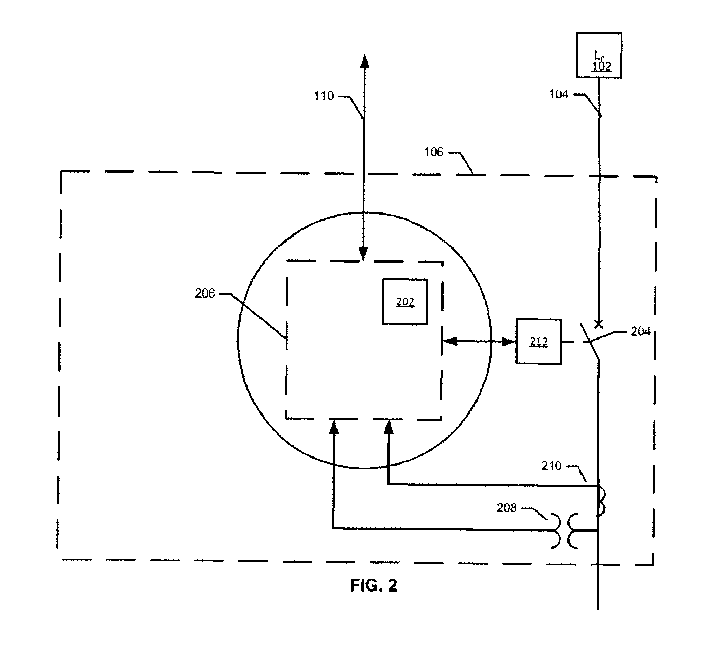

FIG. 2 illustrates overview block diagram of an embodiment of a meter 106 further comprising an accelerometer 202 or piezo-electric device for obtaining vibration data from switch 204 actuation. In this exemplary embodiment, the utility service is electric power, though other meters for utility services such as water, natural gas, and the like are contemplated within the scope of embodiments of the present invention. Analog voltage and current inputs are provided to meter electronics 206. The analog signals are derived from an electrical power feed 104. Generally, the electrical power feed 104 is an alternating current (AC) source. In one aspect, the power feed 104 is a single-phase power feed. In another aspect, the power feed 104 is a poly-phase (e.g., three-phase) power feed. In one aspect, the electrical power feed 104 can be the one being metered by the meter 106. In another aspect, the input voltage and input current analog signals can be derived from other electrical sources. In one aspect, the analog voltage signal can be provided by one or more potential transformers (PT) 208, if needed, though other means such as a voltage divider, capacitive coupling, or the like can be used. If the voltage level of the source is sufficiently low (e.g., .25 volts AC, or lower), then a PT 208 or other means of stepping down or transforming the voltage can be omitted. Similarly, in one aspect, the analog current signal can be provided by one or more current transformers (CT) 210. In one aspect, the one or more CTs 210 can have a turns ratio of 1:2500. In one aspect, one or more resistors (not shown) can be used to convert the current signal from the CT 210 into a voltage signal. In one aspect, the actuation detection comprises an accelerometer 202 and the meter electronics 206. In one aspect, the accelerometer 202 or piezo-electric device produces vibration data. In one aspect, vibration data can be used to form vibration signatures. In one aspect, vibration signatures are formed through analysis of the vibration data. In one aspect, time-domain analysis is used to form the vibration signatures. In one aspect, frequency-domain analysis is used to form the vibration signatures. In one aspect, vibration data can be analyzed to determine whether the switch 204 responded to an actuation command. For example, vibration data produced by the accelerometer 202 or piezo-electric device can be compared to known vibration signatures for opening or closing the switch 204 to determine whether the switch 204 responded to a remote command. In one aspect, the accelerometer 202 is a MEMS accelerometer.

In one aspect, a remote switch actuation signal is received by the meter electronics 206 over a network 110. The meter electronics 206 cause a control 212 to operate the switch 204 in accordance with the actuation signal. Actuation can comprise a connection or disconnection of a utility service such as the power feed 104 using a switch 204 associated with the meter 106. For example, in one aspect the meter 106 comprises a load control unit (e.g., relays) 212 to control the consumption of the utility service by the load 102. In some instances there can be requirements by various utilities to connect or disconnect the load 102 in a random manner to help avoid imbalances and fluctuations on the utility distribution system.

Further comprising the embodiment of FIG. 2 are the meter's electronics 206. In one aspect, the electronics 206 comprise at least a memory, and one or more processors and provide an interface for receiving a signal from the network 110 and causing the switch 204 to actuate via the control 212. The memory of the meter electronics 206 can be used to store vibration data as received from the accelerometer 202 or piezo-electric device. The meter electronics 206 can comprise a transmitter that can be used to transmit the vibration data from the accelerometer 202 or piezo-electric device over the network 110 to a separate computing device 108. The vibration data can be analyzed to determine whether an actuation of the switch 204 occurred. In one aspect, the meter's electronics 206 can comprise one or more metering micro-controllers including a Teridian 6533 controller or a Teridian 6521 controller as are available from Maxim Integrated Products, Inc. (Sunnyvale, California), among others.

In one aspect, analyzing the vibration data caused by a physical event can comprise forming one or more identified vibration signatures that are each associated with a respective known physical event. In one aspect, forming the one or more identified vibration signatures that are each associated with a respective known physical event comprises forming the one or more identified vibration signatures using time-domain analysis. In one aspect, forming the one or more identified vibration signatures that are each associated with a respective known physical event comprises forming the one or more identified vibration signatures using frequency-domain analysis. In one aspect, the one or more identified vibration signatures are formed using the computing device 108 and stored in a memory associated with the computing device 108. For example, identified vibration signatures can be formed for various types and sizes of electromechanical switches, valves, actuators, solenoids, and the like and for various actuations such as opening, closing, partial opening, partial closing, etc..

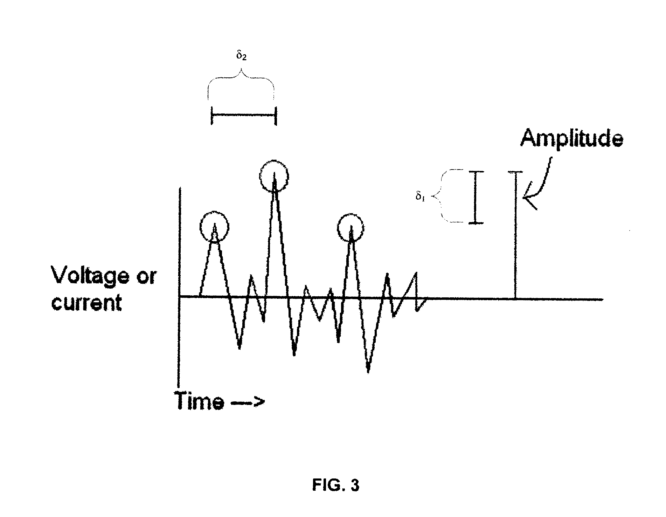

As noted above, in one aspect the one or more identified vibration signatures can be formed using time-domain analysis. This can be performed through a time-domain analysis of peak amplitudes and time between peaks of vibration information. As shown in FIG. 3, an accelerometer, piezo-electric device or other device can be used to produce a voltage or current signal based on vibrations experienced by the accelerometer or device. In one aspect, if an accelerometer is used, it can be a MEMS accelerometer. In one aspect, a piezo-electric device can be used. In one aspect, the accelerometer or other device is associated with a switch or other mechanical or electromechanical device The amplitudes, changes in amplitude (δ₁), and time between amplitude peaks (δ₂) of the vibration signal can be used to develop one or more identified vibration signatures for a specific device. Different vibration signatures can be developed for different physical events of the same device. For example, a single switch can have a first identified vibration signature associated with opening, a second identified vibration signature for closing, a third identified vibration signature for partial closing, and the like. Generally, time-domain analysis can be used for reproducible events with a low degree of variability like switches closing and generally not used for events with a high degree of variability, such as speech.

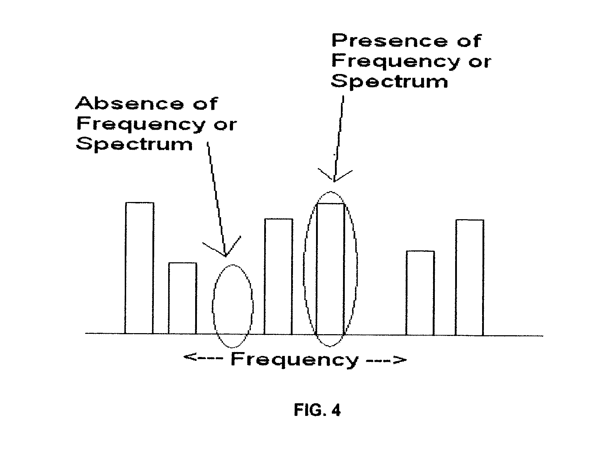

Also as noted above, in one aspect the one or more identified vibration signatures can be formed using frequency-domain analysis of vibration data. As shown in FIG. 4, an accelerometer, piezo-electric device, or other device can be used to produce vibration data based on vibrations experienced by the accelerometer or device. In one aspect, the accelerometer or device is associated with a switch or other mechanical or electromechanical device. When the vibrations of a physical event are detected, the transformation of a vibration data into the frequency domain can be performed. These methods of transformation can include, for example, Fourier transform, z-transform, and the like. As shown in FIG. 4, the absence and/or presence of certain frequencies, frequency ranges or spectrums can be used to identify an event uniquely by using the coefficients, or amplitudes, of a frequency. The coefficients can be stored and compared to vibration data to determine if the event has occurred. The frequency range should be chosen so there should be enough granularity in the frequency domain to accurately characterize an event; however, the resolution of the signal should be sufficient enough such that the quantization of the vibration signal can be resolved to a single event. Just as with time-domain analysis, different frequency-domain vibration signatures can be developed for different physical events of the same device. For example, a single switch can have a first identified vibration signature associated with opening, a second identified vibration signature for closing, a third identified vibration signature for partial closing, and the like.

Vibration data associated with an actual physical event can be received and compared to the identified vibration signatures described herein to identify the physical event. In one aspect, vibration data associated with an actual physical event is received by the computing device 108 and compared to the identified vibration signatures stored in the memory of the computing device 108. In one aspect, vibration data from an actual physical event can be converted into a vibration signature by time-domain analysis or frequency-domain analysis as described herein before it is compared to the identified vibration signatures. In one aspect, vibration data from an actual physical event can be converted into a vibration signature by the computing device 108. By comparing the vibration data associated with an actual physical event to the identified vibration signatures, the physical event that occurred can be identified. The actual physical event can be identified by comparing the vibration data with the one or more identified vibration signatures that are each associated with a respective known physical event. In one aspect, software executing on a computing device such as computing device 108 can perform this comparison and identify the physical event that produced the vibration data.

In one aspect, the vibration data or vibration signal associated with an actual physical event is received in response to sending an actuation signal to a switch or other device and receiving vibration data associated with the switch or other device. In one aspect, after an actuation command is received and the switch attempts to actuate the switch, a meter, using its meter electronics, can listen for a vibration data that matches an identified signature; the meter can wait, for a time, to be alerted to a physical event occurring; or the meter can wait, for a time, to be alerted to a physical event occurring and the vibration data can be compared to an identified signature. In one aspect, the actuation signal is sent by the computing device 108. For example, sending an actuation signal to a switch or other device can comprise sending one of an "open" or a "close" signal to the switch or device.

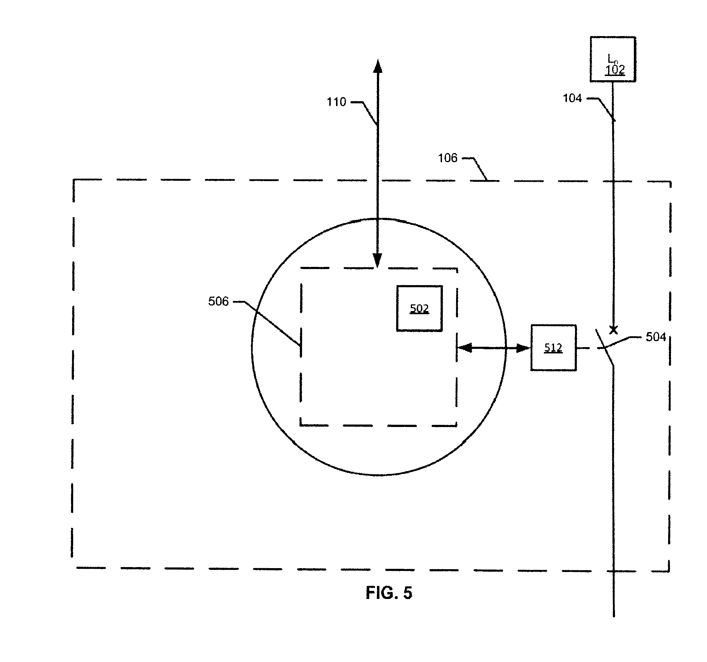

FIG. 5 illustrates another overview block diagram of an embodiment of a meter 106 further comprising an accelerometer 502 piezo-electric device or other device for identifying a physical event involving a switch 504. FIG. 5 illustrates a system comprised of a meter 106. The meter 106 can be used to measure consumption of various different services or products such as electricity, gas, water, and the like. In one aspect, the meter 106 is associated with a switch 504. The switch 504 is configured to be actuated remotely by an actuation signal received by the meter's electronics 506 and implemented using a control 512. In one aspect, actuating the switch 504 remotely comprises sending one of an "open" or a "close" signal to the switch 504. In one aspect, actuating the switch 504 remotely comprises sending one of an "open" or a "close" signal to the meter's electronics 506, which is implemented using the control 512. The system is further comprised of a device that can convert vibrations into electric signals such as an accelerometer 502, piezo-electric device, and the like. In one aspect, if the device is an accelerometer, the accelerometer 502 is a MEMS accelerometer. The accelerometer 502 or device produces vibration data associated with the meter 106. For example, actuation of the switch 504 can cause vibration of the switch 504 or the meter 106, which causes the accelerometer 502 or device to produce vibration data. In one aspect, the vibration data can be filtered prior to analysis. In one aspect, the vibration data from the accelerometer 502 or other device can be digitally filtered to reduce unanticipated and undesired results, such as, but not limited to, noise. In various aspects, the type of digital filtering can include, but is not limited to, Infinite Impulse Response (IIR) and Finite Impulse Response (FIR) filters, as known to one of ordinary skill in the art. In one aspect, a digital filter comprises part of the meter's electronics 206. In one aspect, a digital filter comprises a part of a computing device 108 that receives vibration data. The vibration data can be analyzed using the techniques described herein (e.g., time-domain analysis, frequency-domain analysis) and compared to a vibration signature. The vibration data can be compared to identified vibration signatures for known events to identify the physical event that occurred involving the switch 504. In one aspect, analyzing the vibration data to identify the physical event that occurred comprises analyzing the vibration data using time-domain analysis to identify the physical event that occurred. In another aspect, analyzing the vibration data to determine whether actuation of the switch occurred comprises analyzing the vibration data using frequency-domain analysis to identify the physical event that occurred. Notwithstanding the technique used, the vibration data received from the accelerometer 502 or other device can be compared against known switch actuation signatures to identify the physical event that occurred.

In one aspect, the system is further comprised of a transmitter and a computing device 108. The transmitter is used to transmit vibration data to the computing device 108 and the computing device 108 is used to analyze the vibration data and compare it against identified vibration signatures to determine the physical even that occurred involving the switch 504. In one aspect, comparing vibration data against known switch actuation signatures to identify the physical event that occurred comprises matching vibration data to a given signature by comparing the amplitudes and time deltas between vibration peaks of the vibration data and the known switch actuation signatures. Alternatively, in one aspect using time-domain analysis, operations such as, but not limited to, cross-correlation and circular cross-correlation, can be used to form a positive match between the vibration data and the known switch actuation signatures. In one aspect, the vibration data may or may not be normalized; that is, the signals may be offset such that the average value is 0. This normalization reduces the chance of false positives in some cases.

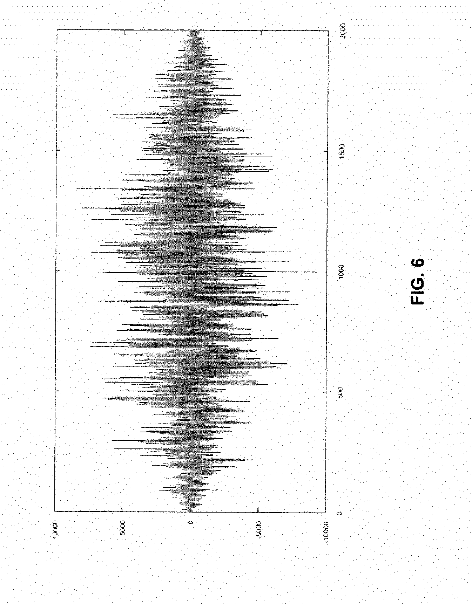

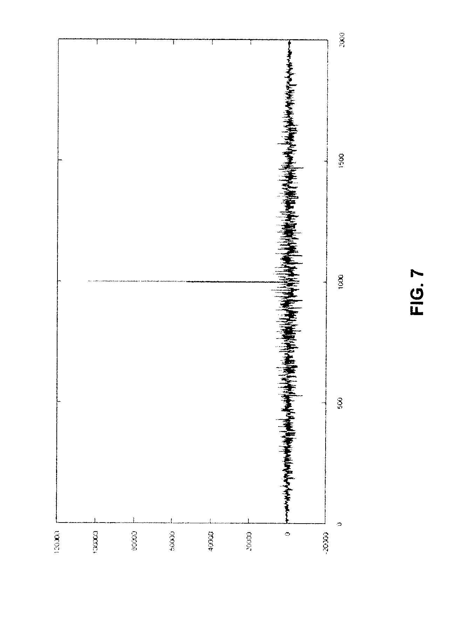

When using cross-correlation, or circular cross-correlation, the output should be monitored for a value, or "spike", above a given threshold. The value of the threshold can be determined by experimentation, length of the signal, and amplitude range of the signals in comparison. If there is a value above a threshold when the cross correlation between a signal and a given signature is performed, then a match is said to be made. For example, if a signal is generated at random and cross correlated with another signal that is generated at random then the result of the cross correlation between the two signals will likely resemble the signal of FIG. 6. If a one of those random signals is cross-correlated with itself, the result of the autocorrelation (or cross correlation of a signal with itself) will likely resemble the signal of FIG. 7. In comparing the signals and making note of their relative amplitudes it is clear that the result of FIG. 7 would be said to have made a "match". The threshold should be chosen to be greater than the maximum amplitude of FIG. 6 but less than the peak value of the spike of FIG. 7. With respect to this system, the autocorrelation can be accepted as a simulation of the cross-correlation between a stored signature of a physical event and another occurrence of that same event as received by the accelerometer.

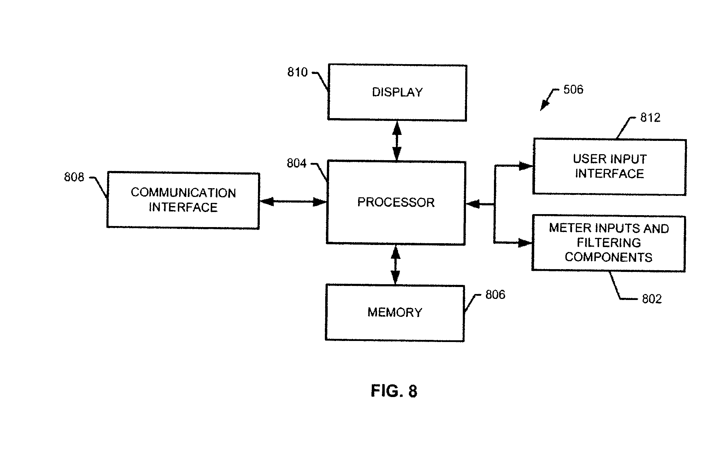

Referring now to FIG. 8, a block diagram of an entity capable of operating as meter electronics 506 is shown in accordance with one embodiment of the present invention. The entity capable of operating as a meter electronics 506 includes various means for performing one or more functions in accordance with embodiments of the present invention, including those more particularly shown and described herein. It should be understood, however, that one or more of the entities may include alternative means for performing one or more like functions, without departing from the spirit and scope of the present invention. As shown, the entity capable of operating as a meter electronics 506 can generally include means, such as one or more processors 804 for performing or controlling the various functions of the entity. As shown in FIG. 8, in one embodiment, meter electronics 506 can comprise meter inputs and filtering components 802. In one aspect, the meter inputs and filter components 802 can comprise voltage and current inputs, one or more ADCs, filtering components, and the like. Further comprising this embodiment of meter electronics 506 is a processor 804 and memory 806.

In one embodiment, the one or more processors 804 are in communication with or include memory 806, such as volatile and/or non-volatile memory that stores content, data or the like. For example, the memory 806 may store content transmitted from, and/or received by, the entity. Also for example, the memory 806 may store software applications, instructions or the like for the one or more processors 804 to perform steps associated with operation of the entity in accordance with embodiments of the present invention. In particular, the one or more processors 804 may be configured to perform the processes discussed in more detail herein for receiving an actuation command for a switch, causing a control associated with the switch to implement the actuation, receiving vibration data from an accelerometer, piezo-electric device or the like associated with the switch, and transmitting the vibration data to a computing device over a network. For example, according to one embodiment the one or more processors 804 can be configured to intermittently store vibration data from the accelerometer, piezo-electric device or the lie in the memory 806. In one aspect, after an actuation command is received and the switch attempts to actuate the switch, the one or more processors 804 can be configured to determine whether vibration data matches an identified signature; the one or more processors 804 can be configured to can wait, for a time, to be alerted to a physical event occurring; or the one or more processors 804 can be configured to wait, for a time, to be alerted to a physical event occurring and the vibration data can be compared to an identified signature. In addition to the memory 806, the one or more processors 804 can also be connected to at least one interface or other means for displaying, transmitting and/or receiving data, content or the like. In this regard, the interface(s) can include at least one communication interface 808 or other means for transmitting and/or receiving data, content or the like, as well as at least one user interface that can include a display 810 and/or a user input interface 812. In one aspect, the communication interface 808 can be used to transfer at least a portion of the vibration data stored in the memory 806 to a remote computing device such as the one described below. For example, in one instance the communication interface 808 can be used to transfer at least a portion of the stored vibration data to a computing device 108 over a communication network 110 so that the transferred vibration data can be analyzed to identify the physical event that occurred involving the switch 504. The user input interface 812, in turn, can comprise any of a number of devices allowing the entity to receive data from a user, such as a keypad, a touch display, a joystick or other input device.

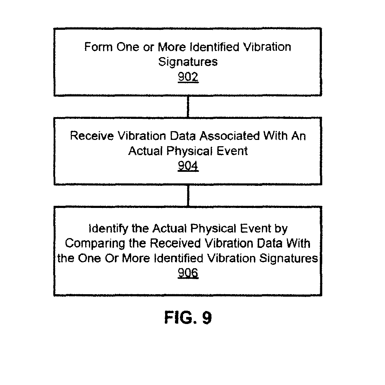

Referring now to FIG. 9, the operations are illustrated that may be taken in order to identify a physical event using a vibration signature. At step 902, one or more identified vibration signatures are formed. Each identified vibration signature is associated with a respective known physical event. In one aspect, forming one or more identified vibration signatures that are each associated with a respective known physical event comprises forming the one or more identified vibration signatures using time-domain analysis. In another aspect, wherein forming one or more identified vibration signatures that are each associated with a respective known physical event comprises forming the one or more identified vibration signatures using frequency-domain analysis. In one aspect, characteristics of the time-domain or frequency-domain analysis of a physical event can be stored in a memory as a vibration signature. In one aspect, forming one or more identified vibration signatures that are each associated with a respective known physical event comprises forming a first identified vibration signature associated with a closing of a switch and forming a second identified vibration signature associated with an opening of the switch. At step 904, vibration data associated with an actual physical event is received. In one aspect, receiving vibration data associated with an actual physical event further comprises sending an actuation signal to a switch and receiving vibration data associated with the switch. In one aspect, sending an actuation signal to a switch comprises sending one of an "open" or a "close" signal to the switch. In one aspect, receiving vibration data associated with the switch comprises receiving the vibration data from an accelerometer associated with the switch. In one aspect, the accelerometer is a MEMS accelerometer. In one aspect, receiving vibration data associated with the switch comprises receiving the vibration data from a piezo-electric device associated with the switch. In one aspect, the switch is associated with a meter. In one aspect, the meter is one of an electric meter, a gas meter or a water meter. At step 906, the actual physical event is identified by comparing the vibration data with the one or more identified vibration signatures that are each associated with a respective known physical event. In one aspect, identifying the actual physical event by comparing the vibration data with the one or more identified vibration signatures that are each associated with a respective known physical event comprises analyzing the vibration data using time-domain analysis and comparing the time-domain analysis of the vibration data to each of the one or more identified vibration signatures. In one aspect, identifying the actual physical event by comparing the vibration data with the one or more identified vibration signatures that are each associated with a respective known physical event comprises analyzing the vibration data using frequency-domain analysis and comparing the frequency-domain analysis of the vibration data to each of the one or more identified vibration signatures.

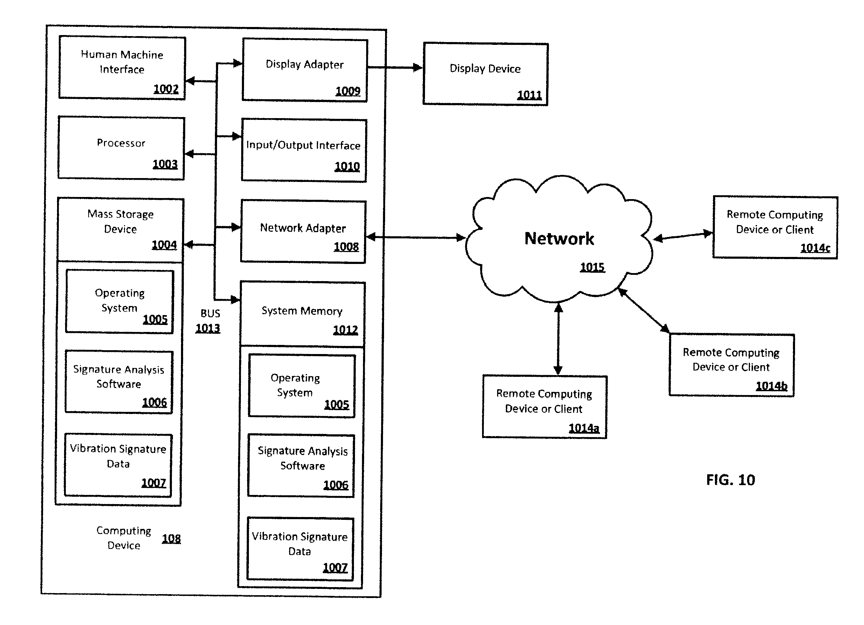

The above system has been described above as comprised of units. One skilled in the art will appreciate that this is a functional description and that software, hardware, or a combination of software and hardware can perform the respective functions. A unit, such as a smart appliance, a smart meter, a smart grid, a utility computing device, a vendor or manufacturer's computing device, etc., can be software, hardware, or a combination of software and hardware. The units can comprise the signature analysis software 1006 as illustrated in FIG. 10 and described below. In one exemplary aspect, the units can comprise a computing device 108 as referenced above and further described below.

FIG. 10 is a block diagram illustrating an exemplary operating environment for performing the disclosed methods. This exemplary operating environment is only an example of an operating environment and is not intended to suggest any limitation as to the scope of use or functionality of operating environment architecture. Neither should the operating environment be interpreted as having any dependency or requirement relating to any one or combination of components illustrated in the exemplary operating environment.

The present methods and systems can be operational with numerous other general purpose or special purpose computing system environments or configurations. Examples of well known computing systems, environments, and/or configurations that can be suitable for use with the systems and methods comprise, but are not limited to, personal computers, server computers, laptop devices, and multiprocessor systems. Additional examples comprise set top boxes, programmable consumer electronics, network PCs, minicomputers, mainframe computers, smart meters, smart-grid components, distributed computing environments that comprise any of the above systems or devices, and the like.

The processing of the disclosed methods and systems can be performed by software components. The disclosed systems and methods can be described in the general context of computer-executable instructions, such as program modules, being executed by one or more computers or other devices. Generally, program modules comprise computer code, routines, programs, objects, components, data structures, etc. that perform particular tasks or implement particular abstract data types. The disclosed methods can also be practiced in grid-based and distributed computing environments where tasks are performed by remote processing devices that are linked through a communications network. In a distributed computing environment, program modules can be located in both local and remote computer storage media including memory storage devices.

Further, one skilled in the art will appreciate that the systems and methods disclosed herein can be implemented via a general-purpose computing device in the form of a computing device 108. The components of the computing device 108 can comprise, but are not limited to, one or more processors or processing units 1003, a system memory 1012, and a system bus 1013 that couples various system components including the processor 1003 to the system memory 1012. In the case of multiple processing units 1003, the system can utilize parallel computing. In one aspect, the processor 1003 is configured to receive vibration data from a device, analyze the vibration data, and identify the physical event that caused the vibration data by comparing the vibration signature to one or more identified vibration signatures.

The system bus 1013 represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus 1013, and all buses specified in this description can also be implemented over a wired or wireless network connection and each of the subsystems, including the processor 1003, a mass storage device 1004, an operating system 1005, signature analysis software 1006, vibration signature data 1007, a network adapter 1008, system memory 1012, an Input/Output Interface 1010, a display adapter 1009, a display device 1011, and a human machine interface 1002, can be contained within one or more remote computing devices or clients 1014a,b,c at physically separate locations, connected through buses of this form, in effect implementing a fully distributed system or distributed architecture.

The computing device 108 typically comprises a variety of computer readable media. Exemplary readable media can be any available media that is non-transitory and accessible by the computing device 108 and comprises, for example and not meant to be limiting, both volatile and non-volatile media, removable and non-removable media. The system memory 1012 comprises computer readable media in the form of volatile memory, such as random access memory (RAM), and/or non-volatile memory, such as read only memory (ROM). The system memory 1012 typically contains data such as vibration signature data 1007 and/or program modules such as operating system 1005 and signature analysis software 1006 that are immediately accessible to and/or are presently operated on by the processing unit 1003.

In another aspect, the computing device 108 can also comprise other non-transitory, removable/non-removable, volatile/non-volatile computer storage media. By way of example, FIG. 10 illustrates a mass storage device 1004 that can provide non-volatile storage of computer code, computer readable instructions, data structures, program modules, and other data for the computing device 108. For example and not meant to be limiting, a mass storage device 1004 can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any number of program modules can be stored on the mass storage device 1004, including by way of example, an operating system 1005 and signature analysis software 1006. Each of the operating system 1005 and signature analysis software 1006 (or some combination thereof) can comprise elements of the programming and the signature analysis software 1006. Vibration signature data 1007 can also be stored on the mass storage device 1004. Vibration signature data 1007 can be stored in any of one or more databases known in the art. Examples of such databases comprise, DB2® (IBM Corporation, Armonk, NY), Microsoft® Access, Microsoft® SQL Server, Oracle® (Microsoft Corporation, Bellevue, Washington), mySQL, PostgreSQL, and the like. The databases can be centralized or distributed across multiple systems.

In another aspect, the user can enter commands and information into the computing device 108 via an input device (not shown). Examples of such input devices comprise, but are not limited to, a keyboard, pointing device (e.g., a "mouse"), a microphone, a joystick, a scanner, tactile input devices such as gloves, and other body coverings, and the like These and other input devices can be connected to the processing unit 1003 via a human machine interface 1002 that is coupled to the system bus 1013, but can be connected by other interface and bus structures, such as a parallel port, game port, an IEEE 1394 Port (also known as a Firewire port), a serial port, or a universal serial bus (USB).

In yet another aspect, a display device 1011 can also be connected to the system bus 1013 via an interface, such as a display adapter 1009. It is contemplated that the computing device 108 can have more than one display adapter 1009 and the computing device 108 can have more than one display device 1011. For example, a display device can be a monitor, an LCD (Liquid Crystal Display), or a projector. In addition to the display device 1011, other output peripheral devices can comprise components such as speakers (not shown) and a printer (not shown), which can be connected to the computer 108 via Input/Output Interface 1010. Any step and/or result of the methods can be output in any form to an output device. Such output can be any form of visual representation, including, but not limited to, textual, graphical, animation, audio, tactile, and the like.

The computing device 108 can operate in a networked environment using logical connections to one or more remote computing devices or clients 1014a,b,c. By way of example, a remote computing device 1014 can be a personal computer, portable computer, a server, a router, a network computer, a smart meter, a vendor or manufacture's computing device, smart grid components, a peer device or other common network node, and on the like. Logical connections between the computing device 108 and a remote computing device or client 1014a,b,c can be made via various networks such as a local area network (LAN), a general wide area network (WAN), mesh backhaul radio, and the like. Such network connections can be through a network adapter 1008. A network adapter 1008 can be implemented in both wired and wireless environments. Such networking environments are conventional and commonplace in offices, enterprise-wide computer networks, intranets, and other networks 1015 such as the Internet.

For purposes of illustration, application programs and other executable program components such as the operating system 1005 are illustrated herein as discrete blocks, although it is recognized that such programs and components reside at various times in different storage components of the computing device 108, and are executed by the data processor(s) of the computer. An implementation of signature analysis software 1006 can be stored on or transmitted across some form of computer readable media. Any of the disclosed methods can be performed by computer readable instructions embodied on computer readable media. Computer readable media can be any available media that can be accessed by a computer. By way of example and not meant to be limiting, computer readable media can comprise "computer storage media" and "communications media." "Computer storage media" comprise volatile and non-volatile, removable and non-removable media implemented in any methods or technology for storage of information such as computer readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

The methods and systems can employ Artificial Intelligence techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

As described above and as will be appreciated by one skilled in the art, embodiments of the present invention may be configured as a system, method, or computer program product. Accordingly, embodiments of the present invention may be comprised of various means including entirely of hardware, entirely of software, or any combination of software and hardware. Furthermore, embodiments of the present invention may take the form of a computer program product on a computer-readable storage medium having computer-readable program instructions (e.g., computer software) embodied in the storage medium. Any suitable non-transitory computer-readable storage medium may be utilized including hard disks, CD-ROMs, optical storage devices, or magnetic storage devices.

Embodiments of the present invention have been described above with reference to block diagrams and flowchart illustrations of methods, apparatuses (i.e., systems) and computer program products. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus, such as the one or more processors 1003 discussed above with reference to FIG. 10, to produce a machine, such that the instructions which execute on the computer or other programmable data processing apparatus create a means for implementing the functions specified in the flowchart block or blocks.

These computer program instructions may also be stored in a computer-readable memory that can direct a computer or other programmable data processing apparatus (e.g., one or more processors 1003 of FIG. 10) to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

Throughout this application, various publications may be referenced. The disclosures of these publications in their entireties are hereby incorporated by reference into this application in order to more fully describe the state of the art to which the methods and systems pertain.

Many modifications and other embodiments of the inventions set forth herein will come to mind to one skilled in the art to which these embodiments of the invention pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

Various aspects and embodiments of the present invention are defined by the following numbered clauses:
1. A method, comprising:
   forming one or more identified vibration signatures that are each associated with a respective known physical event;
   receiving vibration data associated with an actual physical event; and
   identifying the actual physical event by comparing at least a portion of the vibration data with the one or more identified vibration signatures that are each associated with a respective known physical event.
2. The method of clause 1, wherein forming one or more identified vibration signatures that are each associated with a respective known physical event comprises forming the one or more identified vibration signatures using time-domain analysis.
3. The method of any preceding clause, wherein forming one or more identified vibration signatures that are each associated with a respective known physical event comprises forming the one or more identified vibration signatures using frequency-domain analysis.
4. The method of any preceding clause, wherein forming one or more identified vibration signatures that are each associated with a respective known physical event comprises forming a first identified vibration signature associated with a closing of a switch and forming a second identified vibration signature associated with an opening of the switch
5. The method of any preceding clause, wherein receiving vibration data associated with an actual physical event further comprises sending an actuation signal to a switch and receiving vibration data associated with the switch.
6. The method of any preceding clause, wherein sending an actuation signal to a switch comprises sending one of an "open" or a "close" signal to the switch.
7. The method of any preceding clause, wherein receiving vibration data associated with the switch comprises receiving the vibration data from one of an accelerometer or a piezo-electric device associated with the switch.
8. The method of any preceding clause, wherein the accelerometer is a MEMS accelerometer.
9. The method of any preceding clause, wherein the switch is associated with a meter.
10. The method of any preceding clause, wherein the meter is one of an electric meter, a gas meter or a water meter.
11. The method of any preceding clause, wherein identifying the actual physical event by comparing the vibration data with the one or more identified vibration signatures that are each associated with a respective known physical event comprises analyzing the vibration data using time-domain analysis and comparing the time-domain analysis of the vibration data to each of the one or more identified vibration signatures.
12. The method of any preceding clause, wherein analyzing the vibration data using time-domain analysis and comparing the time-domain analysis of the vibration data to each of the one or more identified vibration signatures further comprises filtering the vibration data prior to analyzing the vibration data using time-domain analysis.
13. The method of any preceding clause, wherein analyzing the vibration data using time-domain analysis comprises using one of cross-correlation or circular cross-correlation to compare the time-domain analysis of the vibration data to each of the one or more identified vibration signatures.
14. The method of any preceding clause, wherein identifying the actual physical event by comparing the vibration data with the one or more identified vibration signatures that are each associated with a respective known physical event comprises analyzing the vibration data using frequency-domain analysis and comparing the frequency-domain analysis of the vibration data to each of the one or more identified vibration signatures.
15. The method of any preceding clause, wherein analyzing the vibration data using frequency-domain analysis and comparing the frequency-domain analysis of the vibration data to each of the one or more identified vibration signatures further comprises filtering the vibration data prior to analyzing the vibration data using frequency-domain analysis.
16. A system comprised of:
   a memory; and
   a processor operably connected with the memory, said processor configured to:
      form one or more identified vibration signatures that are each associated with a respective known physical event and store the one or more identified vibration signatures in the memory;
      receive vibration data associated with an actual physical event; and
      identify the actual physical event by comparing the vibration data with the stored one or more identified vibration signatures that are each associated with a respective known physical event.
17. The system of any preceding clause, wherein the processor is configured to form the one or more identified vibration signatures using time-domain analysis.
18. The system of any preceding clause, wherein the processor is configured to form the one or more identified vibration signatures using frequency-domain analysis.
19. The system of any preceding clause, wherein the processor is configured to form a first identified vibration signature associated with a closing of a switch and form a second identified vibration signature associated with an opening of the switch
20. The system of any preceding clause, wherein the processor is further configured to send an actuation signal to a switch and receiving vibration data associated with the switch.
21. The system of any preceding clause, wherein sending an actuation signal to the switch comprises sending one of an "open" or a "close" signal to the switch.
22. The system of any preceding clause, wherein receiving the vibration data associated with the switch comprises receiving the vibration data from one of an accelerometer or a piezo-electric device associated with the switch.
23. The system of any preceding clause, wherein the accelerometer is a MEMS accelerometer.
24. The system of any preceding clause, wherein the switch is associated with a meter.
25. The system of any preceding clause, wherein the meter is one of an electric meter, a gas meter or a water meter.
26. The system of any preceding clause, wherein the processor is configured to analyze the vibration data using time-domain analysis and compare the time-domain analysis of the vibration data to each of the one or more identified vibration signatures.
27. The system of any preceding clause, wherein the system further comprises a filter and analyzing the vibration data using time-domain analysis and comparing the time-domain analysis of the vibration data to each of the one or more identified vibration signatures further comprises filtering the vibration data using the filter prior to analyzing the vibration data using time-domain analysis.
28. The system of any preceding clause, wherein analyzing the vibration data using time-domain analysis comprises using one of cross-correlation or circular cross-correlation to compare the time-domain analysis of the vibration data to each of the one or more identified vibration signatures.
29. The system of any preceding clause, wherein the processor is configured to analyze the vibration signature using frequency-domain analysis and compare the frequency-domain analysis of the vibration signature to each of the one or more identified vibration signatures.
30. The system of any preceding clause, wherein the system further comprises a filter and analyzing the vibration data using frequency-domain analysis and comparing the frequency-domain analysis of the vibration data to each of the one or more identified vibration signatures further comprises filtering the vibration data using the filter prior to analyzing the vibration data using frequency-domain analysis.
31. A computer program product comprised of computer-executable code sections stored on a non-transitory computer-readable medium, said computer-executable code sections comprising:
   a first section for forming one or more identified vibration signatures that are each associated with a respective known physical event;
   a second section for receiving vibration data associated with an actual physical event; and
   a third section for identifying the actual physical event by comparing the vibration data with the one or more identified vibration signatures that are each associated with a respective known physical event.

## Claims

1. A method, comprising:
forming (902) one or more identified vibration signatures that are each associated with a respective known physical event, wherein forming one or more identified vibration signatures that are each associated with a respective known physical event comprises forming the one or more identified vibration signatures using time-domain analysis or frequency-domain analysis;
receiving (904) vibration data associated with an actual physical event; and
identifying (906) the actual physical event by comparing at least a portion of the vibration data with the one or more identified vibration signatures that are each associated with a respective known physical event.

2. The method of claim 1, wherein identifying (906) the actual physical event by comparing the vibration data with the one or more identified vibration signatures that are each associated with a respective known physical event comprises analyzing the vibration data using time-domain analysis and comparing the time-domain analysis of the vibration data to each of the one or more identified vibration signatures.

3. The method of any preceding claim, wherein identifying (906) the actual physical event by comparing the vibration data with the one or more identified vibration signatures that are each associated with a respective known physical event comprises analyzing the vibration data using frequency-domain analysis and comparing the frequency-domain analysis of the vibration data to each of the one or more identified vibration signatures.

4. A system comprised of:
a memory (1012); and
a processor (1003) operably connected with the memory (1012), said processor (1003) configured to:
form one or more identified vibration signatures that are each associated with a respective known physical event and store the one or more identified vibration signatures in the memory (1002);
receive vibration data associated with an actual physical event; and
identify the actual physical event by comparing the vibration data with the stored one or more identified vibration signatures that are each associated with a respective known physical event.

5. The system of claim 4, wherein the processor (1003) is configured to form the one or more identified vibration signatures using time-domain analysis or frequency-domain analysis.

6. The system of claim 4 or claim 5, wherein receiving the vibration data associated with an actual physical event comprises receiving the vibration data from one of an accelerometer (202) or a piezo-electric device associated with a switch (204).

7. The system of any of claims 4 to 6, wherein the processor (1003) is configured to analyze the vibration data using time-domain analysis and compare the time-domain analysis of the vibration data to each of the one or more identified vibration signatures.

8. The system of claim 7, wherein analyzing the vibration data using time-domain analysis comprises using one of cross-correlation or circular cross-correlation to compare the time-domain analysis of the vibration data to each of the one or more identified vibration signatures.

9. The system of any of claims 4 to 8, wherein the processor is (1003) configured to analyze the vibration signature using frequency-domain analysis and compare the frequency-domain analysis of the vibration signature to each of the one or more identified vibration signatures.

10. A computer program product comprised of computer-executable code sections stored on a non-transitory computer-readable medium, said computer-executable code sections comprising:
a first section for forming (902) one or more identified vibration signatures that are each associated with a respective known physical event;
a second section for receiving (904) vibration data associated with an actual physical event; and
a third section for identifying (906) the actual physical event by comparing the vibration data with the one or more identified vibration signatures that are each associated with a respective known physical event.
